# FASCICULE DE BREVET EUROPEEN

(11) **EP 2 363 934 B1**
(45) Date de publication et mention de la délivrance du brevet: **23.11.2016**
(21) Numéro de dépôt: 11305199.9
(22) Date de dépôt: 24.02.2011
(51) Int. Cl.: H02G 3/16

(54) **Dispositif d'encastrement pré-équipé pour appareillage électrique**
Vorausgestattete Einbauvorrichtung für elektrische Geräte
Pre-equipped embedding device for an electrical appliance

(30) Priorité: 03.03.2010 FR 1051522
(43) Date de publication de la demande: 07.09.2011
(73) Titulaire: HAGER CONTROLS (Société par Actions Simplifiée), 67700 Saverne (FR)
(72) Inventeur: Colinmaire, Thierry, 57370, PHALSBOURG (FR)
(74) Mandataire: Nuss, Laurent

(56) Documents cités:
- EP-A1- 0 592 909
- DE-U1-202009 006 005
- JP-A- 2 273 016

## Description

La présente invention relève du domaine des réseaux électriques, et concerne un dispositif d'encastrement pour appareillage électrique. Ce genre de dispositif comprend classiquement au moins une boîte, fixée dans une paroi, et un appareillage électrique, fixé dans cette boîte. De tels dispositifs sont utilisés dans des réseaux électriques de moyenne tension, comme pour de l'éclairage, ou de l'alimentation électrique domestique. La présente invention relève de l'utilisation de dispositifs d'encastrement pour appareillage électrique dans des réseaux de communication basse tension, comme des connexions à l'Internet, ou des réseaux de commande.

FR-A-2 924 535 divulgue une boîte d'encastrement, munie d'un logement pour un connecteur spécifique, apte à pivoter dans la paroi de fond de la boîte d'encastrement. Le connecteur, de conception dédiée, est, d'un côté, relié au réseau d'alimentation, et de l'autre, comprend des connecteurs femelles, capables d'accueillir les fiches mâles d'un appareillage. Le degré de liberté en rotation du connecteur permet de décaler angulairement l'appareillage de la boîte d'encastrement, ce qui peut être utile lorsque la boîte a été mal orientée. Des inconvénients de ce type de dispositif sont la faible ergonomie de montage de l'appareillage ainsi que l'utilisation d'un connecteur de conception dédiée.

GB-A-2 430 087 concerne une boîte destinée à être encastrée dans un mur, et à accueillir un appareillage électrique. Au fond de la boîte se trouve un connecteur, pouvant être relié au réseau électrique alimentant l'appareillage et permettant aussi de faire du repiquage. Des câbles électriques, ou des pièces rigides, relient électriquement le connecteur et l'appareillage. Des inconvénients de ce type de dispositif sont, d'une part, la nécessite de connecter la boîte elle-même avec un connecteur d'un standard particulier, dit « wieland », et, d'autre part, la nécessité de réaliser le câblage avant d'encastrer la boîte.

Dans la demande EP-A-0 377 093, la boîte est destinée à être encastrée dans un mur, et accueille, éventuellement, plusieurs appareillages. Dans le fond de la boîte résident des connecteurs, liés, d'un côté, à des câbles connectés aux appareillages, et, de l'autre côté, à une fiche adaptée, formant l'extrémité du réseau, ou la connexion vers une autre boîte du même type. Néanmoins, ce document n'enseigne toutefois pas de mode de fixation du connecteur. De plus, dans ce type de dispositif, le connecteur est situé à l'extérieur et non à l'intérieur de la boîte, ce qui implique de réaliser le câblage avant l'encastrement de la boîte. Enfin, la connexion avec le réseau se fait toujours au niveau de la paroi de la boîte, et au même endroit, par rapport à celle-ci, et ne permet donc aucune modularité.

Le document EP 0592909 divulgue un dispositif d'encastrement pour appareillage électrique, à relier, par au moins un câble source à un réseau électrique tel qu'un réseau de communication, comprenant une boîte, constituée par une paroi de fond et par des parois latérales, définissant un volume intérieur de boîte selon le préambule de la revendication 1.

Enfin, US-A-2002/0185296 décrit une boîte qui comporte un bloc, accueillant, d'une part, les câbles d'un réseau électrique, et, d'autre part, les fiches d'un appareillage de conception adaptée. L'appareillage est inséré dans la boîte et ainsi enfiché dans le bloc. Le dispositif comprend donc un composant, le bloc, connecté d'un côté au réseau et de l'autre à l'appareillage. Néanmoins, avec ce type dispositif, seuls des appareillages adaptés, en termes de configuration des fiches, peuvent être insérés.

De plus, il est souhaitable d'éviter, lors de l'installation, le recours à des outillages spécifiques, chers et/ou fragiles pour le montage de l'appareillage dans la boîte et/ou le câblage. Un autre problème courant est la nécessité de prévoir une boîte de grandes dimensions, afin de pouvoir y installer le câble reliant l'appareillage, ainsi qu'au moins un connecteur, de dimensions inconnues a priori. Une grande boîte nécessite donc des appareillages de grande surface frontale, afin de couvrir toute la boîte, ainsi que des ouvertures de grandes tailles dans le mur, ce qui est plus difficile à réaliser, fragilise la structure, et augmente les ponts sonores. Enfin, les câbles installés dans le bâtiment peuvent être relativement rigides, et, par conséquent, difficiles à manipuler lors de la mise en place de l'appareillage dans la boîte.

La présente invention a pour but de pallier ces inconvénients, en proposant un dispositif d'encastrement pour appareillage électrique, dont l'installation est ergonomique, le volume réduit et qui respecte néanmoins les contraintes liées à l'utilisation de câbles de réseau électrique de communication, à savoir, par exemple, des limites de rayon de courbure, de force de traction et de testabilité de la connexion.

A cet effet, l'invention a pour objet un dispositif d'encastrement pour appareillage électrique, à relier, par au moins un câble source, à un réseau électrique, tel qu'un réseau de communication, dispositif comprenant une boîte, constituée par une paroi de fond et par des parois latérales, définissant un volume intérieur de boîte. Ce dispositif d'encastrement est caractérisé en ce qu'il comprend, en outre, au moins un élément de liaison amovible, comprenant des moyens d'accrochage et de connexion à une portion d'extrémité du au moins un câble source, des moyens d'ancrage à la boîte, coopérant avec au moins un site de réception aménagé dans le volume intérieur de la boîte, ainsi qu'une fiche d'un standard de connexion, destinée à accueillir l'extrémité d'un câble standard pouvant être relié à l'appareillage et former ainsi une rallonge entre ce dernier et ledit élément de liaison, permettant ainsi de solidariser, à la fois mécaniquement et électriquement, le au moins élément de liaison, d'une part, à l'au moins un câble source, et, d'autre part, au câble standard, et de fixer l'élément de liaison à la boîte.

L'invention a aussi pour objet un procédé de mise en oeuvre d'un tel dispositif, comprenant une étape consistant à faire entrer une portion d'extrémité du au moins un câble source dans la boîte, ce, éventuellement, en ayant au préalable cassé un opercule de ladite boîte afin de créer une ouverture par laquelle ladite portion d'extrémité est insérée dans le volume intérieur de boîte. Ce procédé est caractérisé en ce qu'il comprend, en outre, des étapes ultérieures consistant, d'une part, à fixer le au moins un câble source à un élément de liaison amovible, puis, d'autre part, à fixer ce dernier à la boîte, et, plus particulièrement, à un site de réception aménagé dans le volume intérieur de la boîte.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :

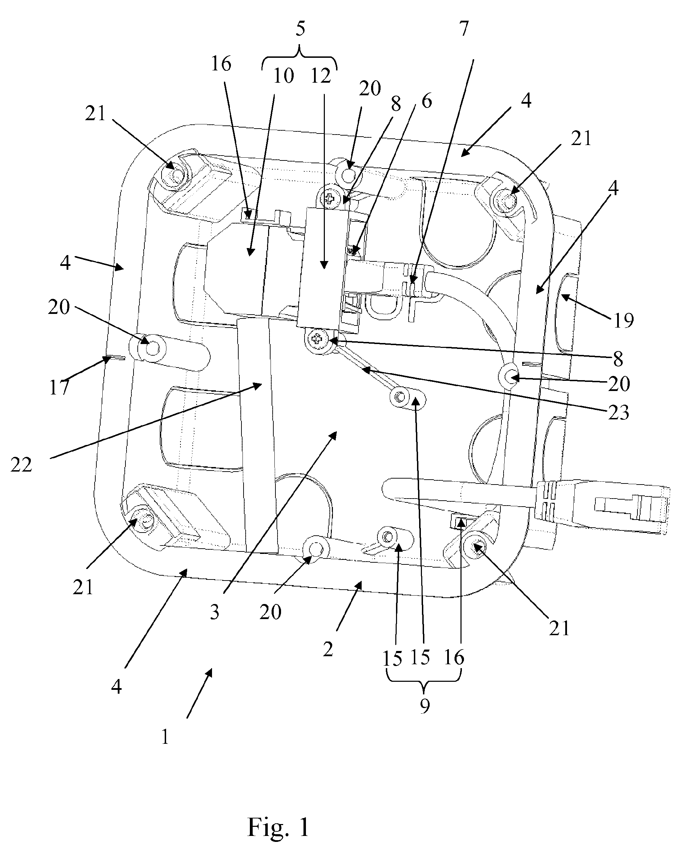

- la figure 1 montre un dispositif selon l'invention ;

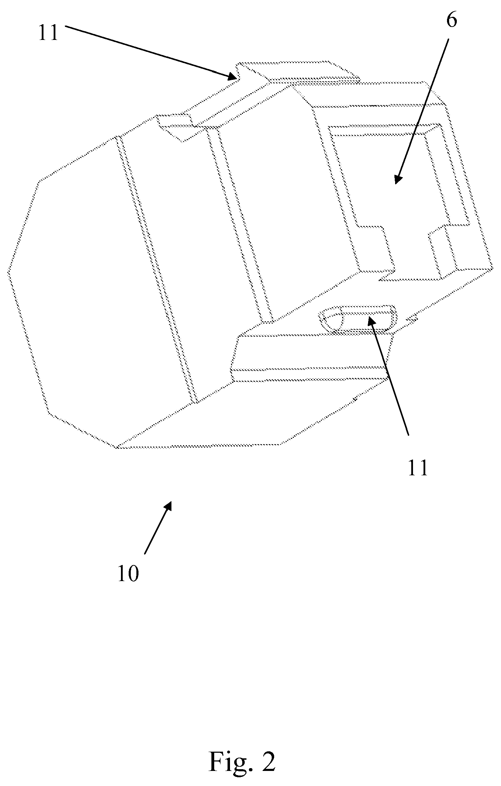

- la figure 2 montre un connecteur utilisé par l'invention ;

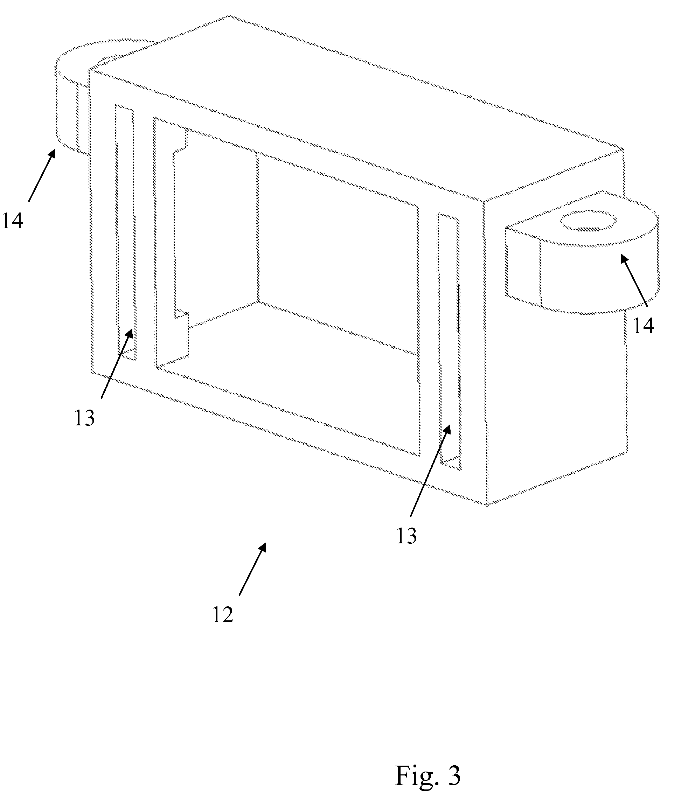

- la figure 3 montre un cavalier utilisé comme composant de l'élément de liaison ;

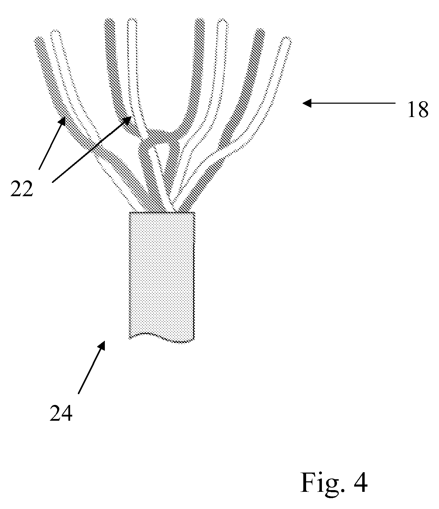

- la figure 4 montre un câble composite classique, et
- la figure 5 montre une autre version du dispositif selon l'invention.

L'invention consiste en un dispositif d'encastrement pour appareillage électrique 1, à relier, par au moins un câble source 22, à un réseau électrique, tel qu'un réseau de communication. Ce dispositif comprend une boîte 2, constituée par une paroi de fond 3 et par des parois latérales 4, définissant un volume intérieur de boîte 2. L'appareillage électrique, devant être relié au réseau de communication, peut consister, par exemple, en une prise de connexion à un réseau informatique, tel que l'Internet, ou un réseau local, une prise de connexion à un réseau téléphonique, ou encore un appareil de contrôle ou de pilotage.

Le dispositif selon l'invention est donc destiné à être encastré dans un mur, ou dans un autre élément fixe, afin de ne laisser apparaître que la partie de l'appareillage avec laquelle interagit l'utilisateur. Le au moins un câble source 22 est, bien entendu, adapté au type de réseau, mais ne présente pas de connecteur ou de fiche de connexion au niveau de son extrémité libre. La boîte 2 est généralement réalisée en matière plastique, et présente des moyens de fixation de l'appareillage 20, par exemple sous la forme de plots pour appareillage dans lesquels des vis, reliées, en outre, à l'appareillage, peuvent s'engager. La boîte 2 présente aussi des moyens d'encastrement 21, pour l'encastrement dans un mur ou un élément qui y est fixé, par exemple sous la forme de quatre plots, dans lesquels peuvent s'engager des vis, elles-mêmes déjà engagées dans des griffes permettant d'arrêter la boîte 2.

La boîte 2 comporte, en outre, des opercules 19, situés à la jonction entre la paroi de fond 3 et les parois latérales 4. Ces opercules 19 sont des portions de paroi, dont la rupture est facilitée par une ligne de fragilisation, ou par une entaille débouchante, ne laissant l'opercule 19 que partiellement relié au reste de la boîte 2. Ouvrir ces opercules 19 crée une ouverture par laquelle il est possible de faire entrer, dans le volume intérieur de boîte 2, des câbles ou gaines provenant du bâtiment, et, en particulier, la portion d'extrémité 18 du au moins un câble source 22.

Selon l'invention, le dispositif comprend, en outre, au moins un élément de liaison 5 amovible, comprenant des moyens d'accrochage et de connexion à une portion d'extrémité 18 du au moins un câble source 22, des moyens d'ancrage 8 à la boîte 2, coopérant avec au moins un site de réception 9 aménagé dans le volume intérieur de la boîte 2, ainsi qu'une fiche 6 d'un standard de connexion, destinée à accueillir l'extrémité d'un câble standard 7 pouvant être relié à l'appareillage et former ainsi une rallonge entre ce dernier et ledit élément de liaison 5, permettant ainsi de solidariser, à la fois mécaniquement et électriquement, le au moins élément de liaison 5, d'une part, à l'au moins un câble source 22, et, d'autre part, au câble standard 7, et de fixer l'élément de liaison 5 à la boîte 2.

Le dispositif selon l'invention comprend donc un câble standard 7, et l'élément de liaison 5 peut assurer la connexion électrique entre, d'une part, le au moins un câble source 22, et, d'autre part, ce câble standard 7, formant rallonge, auquel l'appareillage est connecté. C'est grâce à cet élément de liaison 5 que l'appareillage communique avec le réseau, et, ce, en utilisant un standard de câble. Par exemple, la fiche de l'élément de liaison peut être du type femelle RJ45, ou encore femelle RJ11, ou d'un autre quelconque standard de communication. Le câble standard peut alors, par exemple, être un câble de communication présentant deux fiches mâles du standard RJ45, ou du standard RJ11. Cet élément de liaison 5 peut être fixé à la boîte 2, et ce, de façon amovible. Le câble standard 7 est du même standard de connexion que la fiche 6 et au moins une de ses extrémités est apte à coopérer avec la fiche 6.

Ainsi, il est possible de solidariser, à la fois mécaniquement et électriquement, l'élément de liaison 5, d'une part, à l'au moins un câble source 22, et, d'autre part, au câble standard 7, formant rallonge. Le câble standard 7, l'élément de liaison 5, et le au moins un câble source 22 se trouvent alors reliés électriquement et mécaniquement. Si l'élément de liaison 5 est, en outre, fixé à la boîte 2, le au moins un câble source 22 et le câble standard 7, formant rallonge, seront, eux aussi, au moins partiellement fixés à elle. Il résulte du respect de standard de connexion que l'installation et l'éventuelle réparation du câble standard 7 et/ou de l'élément de liaison 5 sont simplifiées pour un installateur normalement qualifié. Le câble standard 7, formant rallonge, est, au niveau de son extrémité destinée à être fixée à l'élément de liaison 5, apte à coopérer avec la fiche 6, et présente donc, éventuellement, une fiche mâle du type RJ45, ou encore RJ11. Dans le mode de réalisation illustré, le standard utilisé est du RJ45. Les moyens d'ancrage 8 à la boîte 2 de l'élément de liaison 5 sont à base de vis ou d'encliquetage, ou de tout autre moyen de fixation amovible connu de l'homme du métier. Cela permet ainsi d'envisager de fixer l'élément de liaison 5 à la boîte 2, après avoir attaché à l'élément de liaison 5, d'une part, le au moins un câble source 22, et, d'autre part, le câble standard 7, formant rallonge, ce qui garantit une bonne ergonomie pour l'installateur.

Un des avantages est donc de pouvoir ajuster la longueur du au moins un câble source 22, de sorte que l'élément de liaison 5, qui y est fixé, se trouve au niveau du ou d'un site de réception 9, et, ce, en évitant, à la fois, que le au moins un câble source 22 soit trop tendu, et qu'il présente une longueur excessive, devant être accueillie dans la boîte 2, ce qui limiterait le volume disponible pour l'appareillage. Bien entendu, le site de réception 9, de par sa conception, est apte à accueillir l'élément de liaison 5.

Dans une variante de réalisation de l'invention, le au moins un site de réception 9 est aménagé au niveau de la paroi de fond. Ainsi, lorsque l'élément de liaison 5, auquel sont fixés, d'une part, le au moins un câble source 22, et, d'autre part, le câble standard 7 formant rallonge, est fixé au fond de la boîte 2, le volume disponible pour l'appareillage n'est que légèrement entamé. La surface frontale de l'ensemble n'a pas besoin d'être augmentée, afin de s'accommoder à une fixation sur une des parois latérales 4, et la profondeur de la boîte 2 n'est que très légèrement augmentée, comme l'élément de liaison 5 n'est que légèrement plus grand que la fiche 6 qu'il porte, et que sa position dans la boîte 2 est connue.

Selon une caractéristique avantageuse de l'invention, le au moins un élément de liaison 5 consiste en un assemblage mécanique, et préférentiellement démontable, d'une part, d'un connecteur 10, autodénudant le au moins un câble source 22, portant la fiche 6 et les moyens d'accrochage et de connexion à la portion d'extrémité 18 du au moins un câble source 22 et présentant des moyens de montage 11 au niveau du connecteur 10, tels que des crochets ou des surfaces d'appui pour crochets, et, d'autre part, d'un cavalier 12, sur lequel sont aménagés les moyens d'ancrage 8 et qui présente des moyens d'assemblage 13 au niveau du cavalier 12, aptes à coopérer avec lesdits moyens de montage 11, au niveau du connecteur 10.

Le connecteur 10 permet de relier électriquement le au moins un câble source 22 à la fiche 6. Dans ce cas, le site de réception 9, aménagé au niveau de la boîte 2, coopère directement avec le cavalier 12. Un des avantages d'une telle configuration est qu'il est possible d'utiliser un connecteur de format et dimensions standard, et donc interchangeable et facilement remplaçable en cas de panne. Cet assemblage est, de préférence, démontable, et, par exemple, obtenu grâce à un système d'encliquetage : les moyens d'assemblage 11 au niveau du connecteur 10 prennent la forme d'au moins un crochet et les moyens d'assemblage 13 au niveau du cavalier 12 prennent la forme d'au moins une surface d'appui pour le au moins un crochet, ou inversement. Il peut aussi être réalisé avec tout autre mode d'assemblage démontable, connu de l'homme du métier. Néanmoins, dans le cas où le connecteur 10 utilisé présente, de par sa conception initiale, des moyens de montage 11 particuliers, au niveau du connecteur 10, comme, par exemple, des surfaces d'appui pour crochet, ou des crochets, il peut être pertinent de simplement adapter la conception du cavalier 12, et, plus particulièrement, la conception des moyens d'assemblage 13 au niveau du cavalier 12, à la forme des moyens de montage 11, au niveau du connecteur 10. L'installation du matériel peut donc être réalisée, entre autres, en fixant le au moins un câble source 22 et le cavalier 12 au connecteur 10, puis le connecteur 10 au câble standard 7, formant rallonge, puis en solidarisant le cavalier 12 à la boîte 2.

Selon une caractéristique supplémentaire de l'invention, pour le au moins un élément de liaison 5, le cavalier a la forme d'un parallélépipède rectangle, dimensionné pour pouvoir accueillir au moins partiellement le connecteur 10, les moyens d'assemblage 13, au niveau du cavalier 12, prenant la forme de surfaces d'appui créées par des ouvertures, les moyens de montage 11, au niveau du connecteur 10, prenant la forme de crochets s'insérant dans lesdites ouvertures que forment les moyens d'assemblage 13, et les moyens d'ancrage 8 de l'élément de liaison 5 à la boîte 2 prenant la forme de deux oreilles 14, traversées chacune par un orifice débouchant. De plus, le au moins un site de réception 9 consiste, d'une part, en une paire de plots 15, s'étendant à partir de la paroi de fond 3, et disposés, l'un par rapport à l'autre, de sorte que chacun desdits orifices débouchant du cavalier 12 peut être superposé à un plot 15, pour qu'une vis puisse être insérée, à la fois, dans l'orifice débouchant du cavalier 12, et dans le plot 15, et, d'autre part, en une nervure 16, s'étendant à partir de la paroi de fond 3, et disposée, par rapport aux deux plots 15, de sorte que le connecteur 10 s'appuie contre elle, lorsqu'il est assemblé au cavalier 12, et que ce dernier est fixé à la boîte 2. La position relative de la nervure 16 et des deux plots 15 est adaptée à la conception, d'une part, du connecteur 10, et, d'autre part, du cavalier 12.

Dans une alternative de réalisation de l'invention, la paroi de fond 3 est de forme rectangulaire, et, éventuellement, carrée, les parois latérales 4 étant alors parallèles deux à deux, le dispositif 1 comportant un unique élément de liaison 5, et la boîte 2 présentant deux sites de réception 9 symétriques l'un par rapport à l'autre. Dans le mode de réalisation représenté aux figures annexées, les sites de réception 9 sont obtenus, l'un de l'autre, par, entre autres, une symétrie de rotation, autour du centre du rectangle que forme la paroi de fond 3, et d'un angle de 180°. Ainsi, les deux plots 15, formant partiellement un site de réception 9, sont alignés selon un axe parallèle mais disjoint d'un axe de symétrie du rectangle que forme la paroi de fond 3. C'est au niveau des axes de symétrie de la paroi de fond 3 que les parois latérales 4 portent les plots formant les moyens de fixation de l'appareillage 20. Deux plots 15, appartenant chacun à un site de réception 9 différent, sont reliés par une nervure de rigidification 23, afin de solidifier l'ensemble.

Disposant ainsi de deux sites de réception 9, il est possible de fixer l'élément de liaison 5 à deux endroits différents, ce qui permet de ne pas imposer de rayon de courbure trop faible à l'au moins un câble source 22, dans sa portion pénétrant dans le volume intérieur de boîte 2 à travers l'orifice laissé par un opercule 19 arraché au préalable, et, ce, quel que soit la zone d'arrivée du au moins un câble source 22 dans l'ouverture destinée à accueillir la boîte 2 et aménagée dans le mur. Bien entendu, il est envisageable d'aménager plus de deux sites de réception dans la boîte 2, éventuellement disposés en partie sur les parois latérales 4. Le au moins un câble source 22 peut déboucher à différents endroits dans l'ouverture destinée à accueillir la boîte 2 et aménagée dans le mur, ou l'élément qui y est rattaché. L'installateur pourra alors choisir de façon adéquate l'opercule 19 à arracher afin de faire partiellement entrer le au moins un câble source 22 dans le volume intérieur de boîte 2, le site de réception 9 sur lequel fixer l'élément de liaison 5, et, si cela est possible, l'orientation de la boîte 2 dans l'orifice destiné à l'accueillir.

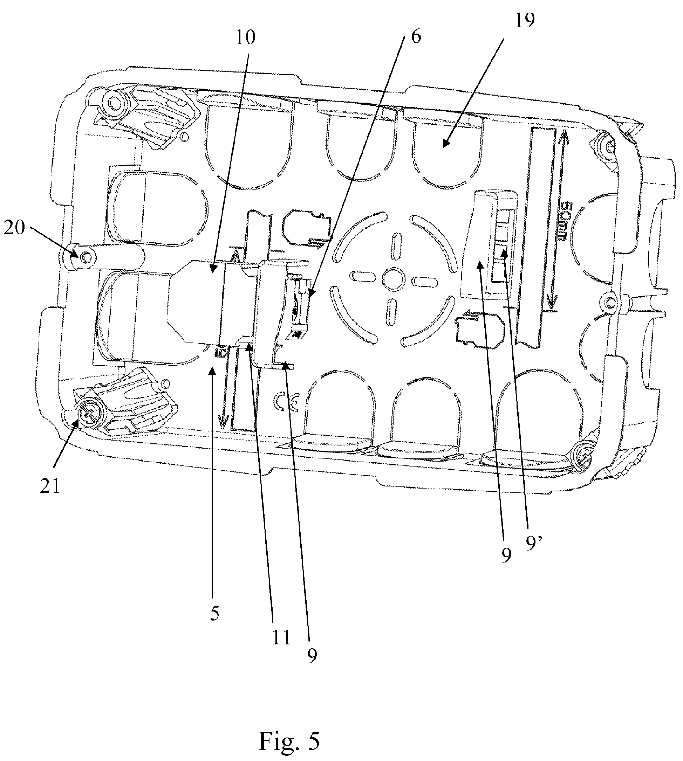

Dans une autre alternative de conception représentée notamment à la figure 5, le au moins un élément de liaison 5 consiste uniquement en un connecteur 10, préférentiellement autodénudant le au moins un câble source 22, portant la fiche 6 et les moyens d'accrochage et de connexion à la portion d'extrémité 18 du au moins un câble source 22 et présentant des moyens de montage 11 au niveau du connecteur 10, tels que des crochets ou des surfaces d'appui pour crochets. Dans cette même alternative, le au moins un site de réception 9 est adapté pour coopérer avec lesdits moyens de montage 11, au niveau du connecteur 10. Ainsi, le câble standard 7, formant rallonge, est relié au connecteur 10, et ce dernier peut, grâce au site de réception 9, être fixé de façon amovible à la boîte 2. Bien entendu, comme le connecteur 10 n'est pas spécifique à l'invention, le site de réception 9 est adapté à la conception des moyens de montage 11 au niveau du connecteur 10. Ainsi, si les moyens de montage 11, au niveau du connecteur 10 sont des ouvertures ou des surfaces d'appui, le site de réception 9 peut présenter des crochets, alors que s'ils prennent la forme de crochets, le site de réception 9 peut se présenter sous la forme d'ouverture ou d'au moins une surface d'appui. Un montage par vissage, ou toute autre forme de montage démontable connue de l'homme du métier, est aussi envisageable. Dans cette alternative, le nombre de pièces est donc réduit, puisque le cavalier 12 n'est pas nécessaire, étant donné que le connecteur 10 est directement fixé à la boîte 2. Le au moins un câble source 22 est directement relié au connecteur 10, mécaniquement et électriquement, le câble standard 7, formant rallonge, étant relié, à l'une de ses extrémités, à l'appareillage et, à l'autre extrémité, au connecteur 10.

Dans la figure 5, où le câble standard 7 et le câble source 22 ne sont pas représentés, le site de réception 9 est aménagé sur la paroi de fond 3 de la boîte 2, à l'intérieur de cette dernière, et présente une ouverture 9' dans laquelle le connecteur 10 formant l'élément de liaison 5 est inséré et maintenu grâce à un crochet formant les moyens de montage 11, ledit élément de liaison 5 étant destiné à être directement fixé, d'une part, à l'au moins un câble source 22, et, d'autre part, au câble standard 7. L'élément de liaison 5 consiste donc essentiellement en un connecteur 10, préférentiellement autodénudant pour le au moins un câble source 22 qui y est directement relié. Comme dans les autres modes de réalisation, l'élément de liaison 5 porte une fiche 6 à laquelle est directement connectée le câble standard 7, directement lié, à son autre extrémité, à l'appareillage. Le connecteur 10 présente un crochet d'encliquetage formant le moyen de montage 11, et le site de réception 9 prend la forme d'une boucle ou coquille disposée sur la paroi de fond 3 en saillie de celle-ci et présentant une ouverture 9'. Cette boucle ou coquille est néanmoins suffisamment large pour maintenir en position le connecteur 10 formant l'élément de liaison 5, et de formes et dimensions adaptées pour coopérer avec le crochet formant le moyen de montage 11, en particulier au niveau de son ouverture 9'. Le connecteur 10 formant l'élément de liaison 5 est donc simplement encliqueté dans la boucle ou coquille formant le site de réception 9 et traverse une ouverture 9' que porte ce dernier, et reste ainsi fixé mécaniquement à la paroi de fond 3, à l'intérieur de la boîte 2. Grâce à sa forme de coquille, le site de réception 9 encapsule donc partiellement le connecteur 10 formant l'élément de liaison 5.

Selon une caractéristique supplémentaire de l'invention, au moins une des parois de la boîte 2, par exemple, une paroi latérale 4, est munie d'un repère 17, préférentiellement visuel, positionné, de sorte que son éloignement, par rapport à un point particulier, par exemple, une extrémité de ladite paroi, correspond à une longueur de dénudage d'une gaine entourant au moins deux câbles sources 22 regroupés dans un câble composite 24, cette longueur étant compatible de façon optimale avec la fixation de l'au moins un câble source 22 aux moyens d'accrochage et de connexion à ce dernier du au moins un élément de liaison 5. Cette longueur est optimale lorsque la portion du câble composite 24, qui se trouve dans le volume intérieur de la boîte 2, est, d'une part, suffisamment grande pour relier l'appareillage sans traction excessive et sans rayon de courbure trop faible, et, d'autre part, suffisamment petite pour ne pas encombrer le volume intérieur de la boîte 2. Ce repère 17 peut se matérialiser au niveau de la tranche d'une paroi et dans la matière même, c'est-à-dire, par exemple, sous la forme d'une surépaisseur, d'une nervure, ou d'une encoche, ou encore par un signe particulier, imprimé ou collé. Ainsi, lorsque que le au moins un câble source 22 est inséré dans la boîte 2 au travers de l'orifice créé par l'arrachage d'un opercule 19, la distance entre, d'une part, la paroi latérale 4, dans laquelle se trouve partiellement cet orifice et, d'autre part, la paroi latérale 4 qui lui fait face, représente la longueur que doit avoir la portion du au moins un câble source 22 qui se trouve dans le volume intérieur de la boîte 2, et donc aussi la longueur que doit avoir la portion du câble composite 24 qui se trouve dans le volume intérieur de la boîte 2.

Il suffit donc à l'installateur de couper le câble composite 24 au niveau de la paroi latérale 4 qui fait face à la paroi latérale 4 qu'il traverse. Le repère 17 visuel à utiliser pour le dénudage est alors celui situé au niveau d'une des deux autres parois latérales 4 : le câble composite 24, et, plus particulièrement, la gaine, recouvrant les câbles source 22 au niveau de l'extrémité libre du câble composite 24, doit être dénudé à partir de ce repère 17 visuel, lorsqu'il est maintenu de sorte que son extrémité libre arrive au niveau de la paroi latérale 4 faisant face à celle qu'il traverse. La position de ce repère 17, les dimensions de la boîte 2, l'emplacement des opercules 19, ainsi que la position du au moins un site de réception 9, sont tels qu'il est possible de ne pas imposer au câble source 22, et donc aussi au câble composite 24, entre son entrée dans la boîte 2 et l'élément de liaison 5 auquel il est relié, un rayon de courbure inférieur à un rayon de courbure de sécurité, lorsque l'élément de liaison 5 est fixé au site de réception 9.

L'invention porte, aussi, sur le procédé de mise en oeuvre du dispositif précédemment décrit. Ainsi, il s'agit du procédé de mise en oeuvre d'un dispositif d'encastrement pour appareillage électrique 1, à relier, par au moins un câble source 22, à un réseau électrique, tel qu'un réseau de communication, dispositif comprenant une boîte 2, constituée par une paroi de fond 3 et par des parois latérales 4, définissant un volume intérieur de boîte 2, le dit procédé comprenant une étape consistant à faire entrer une portion d'extrémité 18 du au moins un câble source 22 dans la boîte 2, ce, éventuellement, en ayant au préalable cassé un opercule 19 de ladite boîte 2 afin de créer une ouverture par laquelle ladite portion d'extrémité 18 est insérée dans le volume intérieur de boîte 2. En effet, il est envisageable que la boîte 2 soit munie, par avance, d'au moins une ouverture par laquelle la partie d'extrémité 18 du câble source 22 peut être insérée dans la boîte 2. L'opération de dénudage d'une gaine entourant au moins deux câbles sources 22 regroupés dans un câble composite 24 peut être réalisée avant ou après que le câble composite 24 ait été partiellement introduit dans la boîte 2.

Ce procédé comprend, en outre, des étapes ultérieures consistant, d'une part, à fixer le au moins un câble source 22 à un élément de liaison 5 amovible, comprenant des moyens d'accrochage et de connexion à une portion d'extrémité 18 du au moins un câble source 22, des moyens d'ancrage 8 à la boîte 2, coopérant avec au moins un site de réception 9 aménagé dans le volume intérieur de la boîte 2, ainsi qu'une fiche 6 d'un standard de connexion, destinée à accueillir l'extrémité d'un câble standard 7 pouvant être relié à l'appareillage et former ainsi une rallonge entre ce dernier et ledit élément de liaison 5, permettant ainsi de solidariser, à la fois mécaniquement et électriquement, le au moins élément de liaison (5), d'une part, à l'au moins un câble source (22), et, d'autre part, au câble standard (7), et de fixer l'élément de liaison (5) à la boîte (2), puis, d'autre part, à fixer ledit élément de liaison 5 à la boîte 2 et, plus particulièrement, à le au moins un site de réception 9.

L'étape consistant à fixer le au moins un câble source 22 à l'élément de liaison 5 est donc réalisée de manière préalable à l'étape de fixation de l'élément de liaison 5 à la boîte 2. Les deux étapes consistant, d'une part, à fixer le au moins un câble source 22 à l'élément de liaison 5, et, d'autre part, à fixer ce dernier à la boîte 2 sont, en outre, réalisées après l'insertion d'une portion d'extrémité 18 du câble source 22 dans le volume intérieur de la boîte 2.

Selon une caractéristique avantageuse du procédé, l'étape consistant à faire entrer une portion d'extrémité 18 du au moins un câble source 22, consiste à introduire dans la boîte 2 un câble composite 24, comprenant au moins deux câbles sources 22, le procédé comprenant, en outre, une étape consistant à réaliser le dénudage d'une gaine du câble composite 24 recouvrant les câbles sources 22, effectué à l'aide d'au moins un repère 17, préférentiellement visuel, aménagé sur la boîte 2, après l'étape consistant à introduire dans la boîte 2 un câble composite 24 mais avant, d'une part, l'étape consistant à fixer le au moins un câble source 22 à un élément de liaison 5, et, d'autre part, l'étape consistant à fixer ledit élément de liaison 5 à la boîte 2. Ce séquencement est particulièrement pertinent lorsque l'installateur utilise le repère 17, décrit plus haut, pour dénuder l'extrémité du câble composite 24. Ainsi, les deux étapes consistant, d'une part, à fixer le au moins un câble source 22 à l'élément de liaison 5, et, d'autre part, à fixer ce dernier à la boîte 2 sont réalisées après le dénudage d'une gaine entourant au moins deux câbles sources 22 regroupés dans un câble composite 24.

De plus, dans une alternative particulière de réalisation, correspondant au cas où l'élément de liaison est obtenu par assemblage, le procédé comprend, en outre, avant l'étape consistant à fixer l'élément de liaison 5 à la boîte 2, une étape consistant à assembler l'élément de liaison 5, à partir, d'une part, d'un connecteur 10, préférentiellement autodénudant le au moins un câble source 22, et, d'autre part, d'un cavalier 12, sur lequel sont aménagés les moyens d'ancrage 8 et qui présente des moyens d'assemblage 13 au niveau du cavalier 12, aptes à coopérer avec lesdits moyens de montage 11, au niveau du connecteur 10.

Enfin, le procédé comprend, en outre, une étape consistant à relier l'élément de liaison 5 à l'extrémité d'un câble standard 7 pouvant être relié à l'appareillage et former ainsi une rallonge entre ce dernier et ledit élément de liaison 5, une étape de fixation de la boîte 2 dans un élément, tel qu'un mur, dans lequel elle est destinée à être encastrée, réalisée après l'étape consistant à faire entrer une portion d'extrémité 18 du au moins un câble source 22 dans la boîte 2, et une étape finale, consistant à fixer l'appareillage à la boîte 2. Préférentiellement, l'étape consistant à fixer le câble standard 7 à l'élément de liaison 5 est réalisée avant la fixation de ce dernier à la boîte 2.

## Revendications

1. Dispositif d'encastrement pour appareillage électrique (1), à relier, par au moins un câble source (22), à un réseau électrique, tel qu'un réseau de communication, le dispositif comprenant une boîte (2), constituée par une paroi de fond (3) et par des parois latérales (4), définissant un volume intérieur de boîte (2), **caractérisé en ce qu'**il comprend, en outre, au moins un élément de liaison (5) amovible, comprenant des moyens d'accrochage et de connexion à une portion d'extrémité (18) du au moins un câble source (22), des moyens d'ancrage (8) à la boîte (2), coopérant avec au moins un site de réception (9) aménagé dans le volume intérieur de la boîte (2), ainsi qu'une fiche (6) d'un standard de connexion, destinée à accueillir l'extrémité d'un câble standard (7) pouvant être relié à l'appareillage et former ainsi une rallonge entre ce dernier et ledit élément de liaison (5), permettant ainsi de solidariser, à la fois mécaniquement et électriquement, le au moins élément de liaison (5), d'une part, à l'au moins un câble source (22), et, d'autre part, au câble standard (7), et de fixer l'élément de liaison (5) à la boîte (2).

2. Dispositif d'encastrement pour appareillage électrique selon la revendication 1, **caractérisé en ce que** le au moins un site de réception (9) est aménagé au niveau de la paroi de fond (3).

3. Dispositif d'encastrement pour appareillage électrique selon l'une quelconque des revendications 1 et 2, **caractérisé en ce que** le au moins un élément de liaison (5) consiste en un assemblage mécanique, et préférentiellement démontable, d'une part, d'un connecteur (10), autodénudant le au moins un câble source (22), portant la fiche (6) et les moyens d'accrochage et de connexion à la portion d'extrémité (18) du au moins un câble source (22) et présentant des moyens de montage (11) au niveau du connecteur (10), tels que des crochets ou des surfaces d'appui pour crochets, et, d'autre part, d'un cavalier (12), sur lequel sont aménagés les moyens d'ancrage (8) et qui présente des moyens d'assemblage (13) au niveau du cavalier (12), aptes à coopérer avec lesdits moyens de montage (11), au niveau du connecteur (10).

4. Dispositif d'encastrement pour appareillage électrique selon la revendication 3, **caractérisé en ce que**, pour le au moins un élément de liaison (5), le cavalier (12) a la forme d'un parallélépipède rectangle, dimensionné pour pouvoir accueillir au moins partiellement le connecteur (10), les moyens d'assemblage (13), au niveau du cavalier (12), prenant la forme de surfaces d'appui créées par des ouvertures, les moyens de montage (11), au niveau du connecteur (10), prenant la forme de crochets s'insérant dans lesdites ouvertures que forment les moyens d'assemblage (13), et les moyens d'ancrage (8) de l'élément de liaison (5) à la boîte (2) prenant la forme de deux oreilles (14), traversées chacune par un orifice débouchant, et **en ce que** le au moins un site de réception (9) consiste, d'une part, en une paire de plots (15), s'étendant à partir de la paroi de fond (3), et disposés, l'un par rapport à l'autre, de sorte que chacun desdits orifices débouchant du cavalier (12) peut être superposé à un plot (15), pour qu'une vis puisse être insérée, à la fois, dans l'orifice débouchant du cavalier (12), et dans le plot (15), et, d'autre part, en une nervure (16), s'étendant à partir de la paroi de fond (3), et disposée, par rapport aux deux plots (15), de sorte que le connecteur (10) s'appuie contre elle, lorsqu'il est assemblé au cavalier (12), et que ce dernier est fixé à la boîte (2).

5. Dispositif d'encastrement pour appareillage électrique selon l'une quelconque des revendications 2 à 4, **caractérisé en ce que** la paroi de fond (3) est de forme rectangulaire, et, éventuellement, carrée, les parois latérales (4) étant alors parallèles deux à deux, le dispositif (1) comportant un unique élément de liaison (5), et la boîte (2) présentant deux sites de réception (9) symétriques l'un par rapport à l'autre.

6. Dispositif d'encastrement pour appareillage électrique selon l'une quelconque des revendications 1 et 2, **caractérisé en ce que** le au moins un élément de liaison (5) consiste uniquement en un connecteur (10), autodénudant le au moins un câble source (22), portant la fiche (6) et les moyens d'accrochage et de connexion à la portion d'extrémité (18) du au moins un câble source (22) et présentant des moyens de montage (11) au niveau du connecteur (10), tels que des crochets ou des surfaces d'appui pour crochets, et **en ce que** le au moins un site de réception (9) est adapté pour coopérer avec lesdits moyens de montage (11), au niveau du connecteur (10).

7. Dispositif d'encastrement pour appareillage électrique selon la revendication 6, **caractérisé en ce que** le site de réception (9) est aménagé sur la paroi de fond (3) de la boîte (2), à l'intérieur de cette dernière, et présente une ouverture (9') dans laquelle le connecteur (10) formant l'élément de liaison (5) est inséré et maintenu grâce à un crochet formant les moyens de montage (11), ledit élément de liaison (5) étant destiné à être directement fixé, d'une part, à l'au moins un câble source (22), et, d'autre part, au câble standard (7).

8. Dispositif d'encastrement pour appareillage électrique selon l'une quelconque des revendications 1 à 7, **caractérisé en ce qu'**au moins une des parois de la boîte (2), par exemple, une paroi latérale (4), est munie d'un repère (17), préférentiellement visuel, positionné, de sorte que son éloignement, par rapport à un point particulier, par exemple, une extrémité de ladite paroi, correspond à une longueur de dénudage d'une gaine entourant au moins deux câbles sources (22) regroupés dans un câble composite (24), cette longueur étant compatible de façon optimale avec la fixation de l'au moins un câble source (22) aux moyens d'accrochage et de connexion à ce dernier du au moins un élément de liaison (5).

9. Procédé de mise en oeuvre d'un dispositif d'encastrement pour appareillage électrique (1), à relier, par au moins un câble source (22), à un réseau électrique, tel qu'un réseau de communication, le dispositif comprenant une boîte (2), constituée par une paroi de fond (3) et par des parois latérales (4), définissant un volume intérieur de boîte (2), le dit procédé comprenant une étape consistant à faire entrer une portion d'extrémité (18) du au moins un câble source (22) dans la boîte (2), ce, éventuellement, en ayant au préalable cassé un opercule (19) de ladite boîte (2) afin de créer une ouverture par laquelle ladite portion d'extrémité (18) est insérée dans le volume intérieur de boîte (2), procédé **caractérisé en ce qu'**il comprend, en outre, des étapes ultérieures consistant,
d'une part, à fixer le au moins un câble source (22) à un élément de liaison (5) amovible, comprenant des moyens d'accrochage et de connexion à une portion d'extrémité (18) du au moins un câble source (22), des moyens d'ancrage (8) à la boîte (2), coopérant avec au moins un site de réception (9) aménagé dans le volume intérieur de la boîte (2), ainsi qu'une fiche (6) d'un standard de connexion, destinée à accueillir l'extrémité d'un câble standard (7) pouvant être relié à l'appareillage et former ainsi une rallonge entre ce dernier et ledit élément de liaison (5), permettant ainsi de solidariser, à la fois mécaniquement et électriquement, le au moins élément de liaison (5), d'une part, à l'au moins un câble source (22), et, d'autre part, au câble standard (7), et de fixer l'élément de liaison (5) à la boîte (2),
puis, d'autre part, à fixer ledit élément de liaison (5) à la boîte (2) et, plus particulièrement, à le au moins un site de réception (9).

10. Procédé selon la revendication 9, **caractérisé en ce que** l'étape consistant à faire entrer une portion d'extrémité (18) du au moins un câble source (22), consiste à introduire dans la boîte (2) un câble composite (24), comprenant au moins deux câbles sources (22), le procédé comprenant, en outre, une étape consistant à réaliser le dénudage d'une gaine du câble composite (24) recouvrant les câbles sources (22), effectué à l'aide d'au moins un repère (17), préférentiellement visuel, aménagé sur la boîte (2), après l'étape consistant à introduire dans la boîte (2) un câble composite (24) mais avant, d'une part, l'étape consistant à fixer le au moins un câble source (22) à un élément de liaison (5), et, d'autre part, l'étape consistant à fixer ledit élément de liaison (5) à la boîte (2).

11. Procédé selon l'une quelconque des revendications 9 et 10, **caractérisé en ce qu'**il comprend, en outre, avant l'étape consistant à fixer l'élément de liaison (5) à la boîte (2), une étape consistant à assembler l'élément de liaison (5), à partir, d'une part, d'un connecteur (10), préférentiellement autodénudant le au moins un câble source (22), et, d'autre part, d'un cavalier (12), sur lequel sont aménagés les moyens d'ancrage (8) et qui présente des moyens d'assemblage (13) au niveau du cavalier (12), aptes à coopérer avec lesdits moyens de montage (11), au niveau du connecteur (10).

12. Procédé selon l'une quelconque des revendications 9 à 11, **caractérisé en ce qu'**il comprend, en outre, une étape consistant à relier l'élément de liaison (5) à l'extrémité d'un câble standard (7) pouvant être relié à l'appareillage et former ainsi une rallonge entre ce dernier et ledit élément de liaison (5), une étape de fixation de la boîte (2) dans un élément, tel qu'un mur, dans lequel elle est destinée à être encastrée, réalisée après l'étape consistant à faire entrer une portion d'extrémité (18) du au moins un câble source (22) dans la boîte (2), et une étape finale, consistant à fixer l'appareillage à la boîte (2).

## Patentansprüche

1. Einbauvorrichtung für ein elektrisches Gerät (1), zum Verbinden mit einem elektrischen Netz, wie bspw. einem Kommunikationsnetz über mindestens ein Quellkabel (22),
wobei die Vorrichtung eine Dose (2) aufweist, die
aus einer Rückwand (3) und aus Seitenwänden (4) gebildet ist, die ein Innenvolumen der Dose (2) definieren, **dadurch gekennzeichnet, dass** sie außerdem mindestens ein entfernbares Verbindungselement (5), das Einrichtungen zur Befestigung an und zur Verbindung mit einem Endabschnitt (18) des mindestens einen Quellkabels (22), Verankerungseinrichtungen (8) an der Dose (2), die mit mindestens einem Aufnahmeplatz (9) zusammenwirken, der im Innenvolumen der Dose (2) angeordnet ist, sowie einen Stecker (6) eines Verbindungsstandards umfasst, der dazu bestimmt ist, das Ende eines Standardkabels (7) aufzunehmen, das mit dem Gerät verbunden werden kann und so eine Verlängerung zwischen diesem letzteren und dem Verbindungselement (5) bilden kann, wodurch es möglich wird, das mindestens eine Verbindungselement (5) einerseits mit mindestens dem einen Quellkabel (22) und andererseits mit dem Standardkabel (7) sowohl mechanisch als auch elektrisch fest zu verbinden und das Verbindungselement (5) an der Dose (2) zu befestigen.

2. Einbauvorrichtung für ein elektrisches Gerät nach Anspruch 1,
**dadurch gekennzeichnet, dass**
der mindestens eine Aufnahmeplatz (9) im Bereich der Rückwand (3) eingerichtet ist.

3. Einbauvorrichtung für ein elektrisches Gerät nach einem der Ansprüche 1 und 2,
**dadurch gekennzeichnet, dass**
das mindestens eine Verbindungselement (5) aus einem mechanischen Zusammenbau einerseits, der vorzugsweise ausbaubar ist, eines Verbinders (10), der das mindestens eine Quellkabel (22) abisoliert, den Stecker (6) und die Einrichtungen zur Befestigung an und zur Verbindung mit dem Endabschnitt (18) des mindestens einen Quellkabels (22) trägt und Montageeinrichtungen (11) im Bereich des Verbinders (10), wie bspw. Haken oder Auflageflächen für Haken, aufweist, und andererseits einer Brücke (12) besteht, auf der die Verankerungseinrichtungen (8) angeordnet sind und die Zusammenbaueinrichtungen (13) im Bereich der Brücke (12) aufweist, die dazu geeignet sind, mit den Montageeinrichtungen (11) im Bereich des Verbinders (10) zusammenzuwirken.

4. Einbauvorrichtung für ein elektrisches Gerät nach Anspruch 3,
**dadurch gekennzeichnet, dass**
das mindestens eine Verbindungselement (5), beziehungsweise die Brücke (12), die Form eines rechtwinkligen Parallelepipeds hat, das dimensioniert ist, um den Verbinder (10) zumindest teilweise aufnehmen zu können, wobei die Zusammenbaueinrichtungen (13) im Bereich der Brücke (12) die Form von Auflageflächen annehmen, die von Öffnungen gebildet werden, wobei die Montageeinrichtungen (11) im Bereich des Verbinders (10) die Form von Haken annehmen, die sich in die Öffnungen einfügen, die von den Zusammenbaueinrichtungen (13) gebildet werden, und die Verankerungseinrichtungen (8) des Verbindungselements (5) an der Dose (2) die Form von zwei Ohren (14) annehmen, die je von einer Durchgangsöffnung durchquert werden, und dass der mindestens eine Aufnahmeplatz (9) einerseits aus einem Paar von Blöcken (15), die sich ausgehend von der Rückwand (3) erstrecken und zueinander derart angeordnet sind, dass jede der Durchgangsöffnungen der Brücke (12) über einem Block (15) angeordnet werden kann, damit eine Schraube sowohl in die Durchgangsöffnung der Brücke (12) als auch in den Block (15) eingeführt werden kann, und andererseits aus einer Rippe (16) besteht, die sich ausgehend von der Rückwand (3) erstreckt und bezüglich der zwei Blöcke (15) derart angeordnet ist, dass der Verbinder (10) sich gegen sie anlegt, wenn er mit der Brücke (12) zusammengebaut und letztere an der Dose (2) befestigt wird.

5. Einbauvorrichtung für ein elektrisches Gerät nach einem der Ansprüche 2 bis 4, **dadurch gekennzeichnet, dass**
die Rückwand (3) von rechteckiger und ggf. quadratischer Form ist, wobei die Seitenwände (4) dann paarweise parallel sind, wobei die Vorrichtung (1) ein einziges Verbindungselement (5) aufweist, und die Dose (2) zwei Aufnahmeplätze (9) aufweist, die zueinander symmetrisch sind.

6. Einbauvorrichtung für ein elektrisches Gerät nach einem der Ansprüche 1 und 2,
**dadurch gekennzeichnet, dass**
das mindestens eine Verbindungselement (5) nur aus einem Verbinder (10) besteht, der das mindestens eine Quellkabel (22) abisoliert, den Stecker (6) und die Einrichtungen zur Befestigung an und zur Verbindung mit dem Endabschnitt (18) des mindestens einen Quellkabels (22) trägt und Montageeinrichtungen (11) im Bereich des Verbinders (10), wie bspw. Haken oder Auflageflächen für Haken, aufweist, und dass der mindestens eine Aufnahmeplatz (9) geeignet ist, um mit dem Montageeinrichtungen (11) im Bereich des Verbinders (10) zusammenzuwirken.

7. Einbauvorrichtung für ein elektrisches Gerät nach Anspruch 6,
**dadurch gekennzeichnet, dass**
der Aufnahmeplatz (9) an der Rückwand (3) der Dose (2) in deren Inneren angeordnet ist und eine Öffnung (9') aufweist, in die der das Verbindungselement (5) formende Verbinder (10) eingeführt und mittels eines die Montageeinrichtungen (11) formenden Hakens gehalten ist, wobei das Verbindungselement (5) dazu bestimmt ist, einerseits an dem mindestens einen Quellkabel (22) und andererseits am Standardkabel (7) direkt befestigt zu werden.

8. Einbauvorrichtung für ein elektrisches Gerät nach einem der Ansprüche 1 bis 7, **dadurch gekennzeichnet, dass**
mindestens eine der Wände der Dose (2), zum Beispiel eine Seitenwand (4), mit einer, vorzugsweise visuellen, Markierung (17) versehen ist, die derart positioniert ist, dass ihre Entfernung bezüglich eines bestimmten Punkts, zum Beispiel eines Endes der Wand, einer Abisolierungslänge einer Hülle entspricht, die mindestens zwei Quellkabel (22) umgibt, die in einem Verbundkabel (24) zusammengefasst sind, wobei diese Länge optimal mit der Befestigung des mindestens einen Quellkabels (22) an den Einrichtungen zur Befestigung an und zur Verbindung mit diesem letzteren des mindestens einen Verbindungselements (5) kompatibel ist.

9. Verfahren zur Verwendung einer Einbauvorrichtung für ein elektrisches Gerät (1), zum Verbinden über mindestens ein Quellkabel (22) mit einem elektrischen Netz, wie bspw. einem Kommunikationsnetz,
wobei die Vorrichtung
eine Dose (2) umfasst, die aus einer Rückwand (3) und aus Seitenwänden (4) gebildet ist, die ein Innenvolumen der Dose (2) definieren, wobei das Verfahren einen Schritt umfasst, der darin besteht, einen Endabschnitt (18) des mindestens einen Quellkabels (22) in die Dose (2) einzuführen, dies ggf. indem vorher ein Deckel (19) der Dose (2) zerbrochen wurde, um eine Öffnung zu erzeugen, durch die der Endabschnitt (18) in das Innenvolumen der Dose (2) eingefügt wird, wobei das Verfahren **dadurch gekennzeichnet ist, dass** es außerdem spätere Schritte umfasst, die darin bestehen einerseits das mindestens eine Quellkabel (22) an einem entfernbaren Verbindungselement (5) zu befestigen, das Einrichtungen zur Befestigung an und zur Verbindung mit einem Endabschnitt (18) des mindestens einen Quellkabels (22), Verankerungseinrichtungen (8) an der Dose (2), die mit mindestens einem Aufnahmeplatz (9) zusammenwirken, der im Innenvolumen der Dose (2) angeordnet ist, sowie einen Stecker (6) eines Anschlussstandards umfasst, der dazu bestimmt ist, das Ende eines Standardkabels (7) aufzunehmen, das mit dem Gerät verbunden werden und so eine Verlängerung zwischen diesem Letzteren und dem Verbindungselement (5) bilden kann, wodurch es möglich wird, das mindestens eine Verbindungselement (5) sowohl mechanisch als auch elektrisch einerseits mit dem mindestens einen Quellkabel (22) und andererseits mit dem Standardkabel (7) fest zu verbinden und das Verbindungselement (5) an der Dose (2) zu befestigen,
folglich andererseits das Verbindungselement (5) an der Dose (2), und insbesondere an dem mindestens einen Aufnahmeplatz (9), zu befestigen.

10. Verfahren nach Anspruch 9,
**dadurch gekennzeichnet, dass**
der Schritt, der darin besteht, einen Endabschnitt (18) des mindestens einen Quellkabels (22) einzuführen, darin besteht, in die Dose (2) ein Verbundkabel (24) einzuführen, das mindestens zwei Quellkabel (22) umfasst, wobei das Verfahren außerdem einen Schritt umfasst, der darin besteht, die Abisolierung einer Hülle des Verbundkabels (24) zu realisieren, das die Quellkabel (22) bedeckt, durchgeführt mit Hilfe mindestens einer, vorzugsweise visuellen, Markierung (17), die auf der Dose (2) angeordnet ist, nach dem Schritt, der darin besteht, ein Verbundkabel (24) in die Dose (2) einzuführen, aber vor einerseits dem Schritt, der darin besteht, das mindestens eine Quellkabel (22) an einem Verbindungselement (5) zu befestigen, und andererseits dem Schritt, der darin besteht, das Verbindungselement (5) an der Dose (2) zu befestigen.

11. Verfahren nach einem der Ansprüche 9 und 10,
**dadurch gekennzeichnet, dass**
es außerdem vor dem Schritt, der darin besteht, das Verbindungselement (5) an der Dose (2) zu befestigen, einen Schritt umfasst, der darin besteht, das Verbindungselement (5) ausgehend einerseits von einem Verbinder (10), der vorzugsweise das mindestens eine Quellkabel (22) abisoliert, und andererseits einer Brücke (12) zu montieren, auf der die Verankerungseinrichtungen (8) angeordnet sind und die Zusammenbaueinrichtungen (13) im Bereich der Brücke (12) aufweist, die dazu geeignet sind, mit den Montageeinrichtungen (11) im Bereich des Verbinders (10) zusammenzuwirken.

12. Verfahren nach einem der Ansprüche 9 bis 11,
**dadurch gekennzeichnet, dass**
es außerdem einen Schritt, der darin besteht, das Verbindungselement (5) mit dem Ende eines Standardkabels (7) zu verbinden, das mit dem Gerät verbunden werden und so eine Verlängerung zwischen diesem letzteren und dem Verbindungselement (5) bilden kann, einen Schritt der Befestigung der Dose (2) in einem Element, wie bspw. einer Mauer, in die sie geeignet ist, eingebaut zu werden, durchgeführt nach dem Schritt, der darin besteht, einen Endabschnitt (18) des mindestens einen Quellkabels (22) in die Dose (2) einzuführen, und einen Endschritt umfasst, der darin besteht, das Gerät an der Dose (2) zu befestigen.

## Claims

1. Embedding device for electrical equipment (1), to be linked, by at least one source cable (22), to an electrical network, such as a communication network, the device comprising a box (2) consisting of a bottom wall (3) and lateral walls (4), defining an internal box volume (2), **characterized in that** it further comprises at least one removable link element (5), comprising means for attachment and connection to an end portion (18) of the at least one source cable (22), means for anchoring (8) to the box (2), cooperating with at least one reception site (9) formed in the internal volume of the box (2), and a socket (6) for a standard connection, intended to accommodate the end of a standard cable (7) that can be linked to the equipment and thus form an extension between the latter and said link element (5), thus making it possible to secure, both mechanically and electrically, the at least one link element (5), on the one hand, to the at least one source cable (22), and, on the other hand, to the standard cable (7), and fix the link element (5) to the box (2).

2. Embedding device for electrical equipment according to Claim 1, **characterized in that** the at least one reception site (9) is formed on the bottom wall (3).

3. Embedding device for electrical equipment according to either one of Claims 1 and 2, **characterized in that** the at least one link element (5) consists of a mechanical assembly, preferably dismantleable, on the one hand, of a connector (10), displacing the insulation of the at least one source cable (22), bearing the socket (6) and the means for attachment and connection to the end portion (18) of the at least one source cable (22) and having mounting means (11) on the connector (10), such as hooks or bearing surfaces for hooks, and, on the other hand, of a cable clamp (12), on which are formed the anchoring means (8) and which has assembly means (13) on the cable clamp (12), suitable for cooperating with said mounting means (11), on the connector (10).

4. Embedding device for electrical equipment according to Claim 3, **characterized in that**, for the at least one link element (5), the cable clamp (12) has the form of a rectangular parallelepiped, dimensioned to be able to at least partially accommodate the connector (10), the assembly means (13), on the cable clamp (12), taking the form of bearing surfaces created by openings, the mounting means (11) on the connector (10), taking the form of hooks that are inserted into said openings forming the assembly means (13), and the means for anchoring (8) the link element (5) to the box (2) taking the form of two lugs (14), each passed through by a through-orifice, and **in that** the at least one reception site (9) consists, on the one hand, of a pair of posts (15), extending from the bottom wall (3), and disposed, relative to one another, such that each of said through-orifices of the cable clamp (12) can be superposed on a post (15), for a screw to be able to be inserted, both into the through-orifice of the cable clamp (12), and into the post (15), and, on the other hand, of a rib (16), extending from the bottom wall (3), and disposed, relative to the two posts (15), such that the connector (10) is pressed against it, when it is assembled with the cable clamp (12), and the latter is fixed to the box (2).

5. Embedding device for electrical equipment according to any one of Claims 2 to 4, **characterized in that** the bottom wall (3) is of rectangular form, and, possibly, square, the lateral walls (4) being parallel in pairs, the device (1) comprising a single link element (5), and the box (2) having two mutually symmetrical reception sites (9).

6. Embedding device for electrical equipment according to either one of Claims 1 and 2, **characterized in that** the at least one link element (5) consists only of a connector (10), displacing the insulation of the at least one source cable (22), bearing the socket (6) and the means for attachment and connection to the end portion (18) of the at least one source cable (22) and having mounting means (11) on the connector (10), such as hooks or bearing surfaces for hooks, and **in that** the at least one reception site (9) is suitable for cooperating with said mounting means (11), on the connector (10).

7. Embedding device for electrical equipment according to Claim 6, **characterized in that** the reception site (9) is formed on the bottom wall (3) of the box (2), inside the latter, and has an opening (9') into which the connector (10) forming the link element (5) is inserted and held by virtue of a hook forming the mounting means (11), said link element (5) being intended to be directly fixed, on the one hand, to the at least one source cable (22), and, on the other hand, to the standard cable (7).

8. Embedding device for electrical equipment according to any one of Claims 1 to 7, **characterized in that** at least one of the walls of the box (2), for example a lateral wall (4), is provided with a marker (17), preferentially visual, positioned such that its distance relative to a particular point, for example an end of said wall, corresponds to a length of stripping of a sheath surrounding at least two source cables (22) grouped together in a composite cable (24), this length being optimally compatible with the fixing of the at least one source cable (22) to the means of attachment and connection thereto of the at least one link element (5).

9. Method for implementing an embedding device for electrical equipment (1), to be linked, by at least one source cable (22), to an electrical network, such as a communication network, the device comprising a box (2), consisting of a bottom wall (3) and of lateral walls (4), defining an internal volume of the box (2), said method comprising a step consisting in passing an end portion (18) of the at least one source cable (22) into the box (2), and doing so, if necessary, by having first broken a seal (19) of said box (2) in order to create an opening through which said end portion (18) is inserted into the internal volume of the box (2), the method being **characterized in that** it further comprises subsequent steps consisting,
on the one hand, in fixing the at least one source cable (22) to a removable link element (5), comprising means for attachment and connection to an end portion (18) of the at least one source cable (22), means for anchoring (8) to the box (2), cooperating with the at least one reception site (9) formed in the internal volume of the box (2), and a socket (6) of a standard connection, intended to accommodate the end of a standard cable (7) that can be linked to the equipment and thus form an extension between the latter and said link element (5), thus making it possible to secure, both mechanically and electrically, the at least one link element (5), on the one hand, to the at least one source cable (22), and, on the other hand, to the standard cable (7), and fix the link element (5) to the box (2),
then, on the other hand, in fixing said link element (5) to the box (2) and, more particularly, to the at least one reception site (9).

10. Method according to Claim 9, **characterized in that** the step consisting in passing an end portion (18) of the at least one source cable (22), consists in introducing into the box (2) a composite cable (24), comprising at least two source cables (22), the method further comprising a step consisting in performing the stripping of a sheath of the composite cable (24) covering the source cables (22), performed using at least one marker (17), preferentially visual, formed on the box (2), after the step consisting in introducing a composite cable (24) into the box (2) but before, on the one hand, the step consisting in fixing the at least one source cable (22) to a link element (5), and, on the other hand, the step consisting in fixing said link element (5) to the box (2).

11. Method according to either one of Claims 9 and 10, **characterized in that** it further comprises, before the step consisting in fixing the link element (5) to the box (2), a step consisting in assembling the link element (5), from, on the one hand, a connector (10), preferentially displacing the insulation of the at least one source cable (22), and, on the other hand, a cable clamp (12), on which are formed the anchoring means (8) and which has assembly means (13) on the cable clamp (12), suitable for cooperating with said mounting means (11), on the connector (10).

12. Method according to any one of Claims 9 to 11, **characterized in that** it further comprises a step consisting in linking the link element (5) to the end of a standard cable (7) that can be linked to the equipment and thus form an extension between the latter and said link element (5), a step of fixing the box (2) into an element, such as a wall, in which it is intended to be embedded, performed after the step consisting in passing an end portion (18) of the at least one source cable (22) into the box (2), and a final step, consisting in fixing the equipment to the box (2).
